# EUROPEAN PATENT APPLICATION

(11) **EP 4 626 050 A1**
(43) Date of publication of application: **01.10.2025**
(21) Application number: 23893391.5
(22) Date of filing: 19.09.2023
(51) Int. Cl.: H04W 8/20

(54) **INFORMATION TRANSMISSION METHOD AND APPARATUS, AND STORAGE MEDIUM**

(30) Priority: 24.11.2022 CN 202211482244
(71) Applicant: Datang Mobile Communications Equipment Co., Ltd., Beijing 100085 (CN)
(72) Inventor: GU, Xiaofei, Beijing 100085 (CN); CHENG, Zhimi, Beijing 100085 (CN)
(74) Representative: Studio Torta S.p.A.
(86) International application number: PCT/CN2023/119840
(87) International publication number: WO 2024/109298

(57) **Abstract**

The present disclosure provides an information transmission method and apparatus, and a storage medium. The method is applied to a digital twin network which includes a physical network entity and a twin network entity of the physical network entity, wherein the physical network entity includes a first controller, and network element devices of a first user plane communicatively connection to the first controller, both of which are based on a software-defined network architecture; and the twin network entity comprises: a second controller, and network element devices of a second user plane communicatively connected to the second controller, both of which are based on a software-defined network architecture; the second controller is used to obtain user plane information from the first controller and send the user plane information to a corresponding network element device of the second user plane, the user plane information is obtained by the first controller from a network element device in the first user plane, and transmission of the user plane information of the physical network entity to a network element device of a user plane of the twin network entity is achieved.

## Description

This application claims priority to Chinese Patent Application No. 202211482244.9, filed to the China National Intellectual Property Administration on November 24, 2022, and entitled "INFORMATION TRANSMISSION METHOD AND APPARATUS, AND STORAGE MEDIUM", which is hereby incorporated by reference in its entirety.

### TECHNICAL FIELD

The present disclosure relates to the field of communications, and in particular to an information transmission method and apparatus, and a storage medium.

### BACKGROUND

With the development of networks, digital twin networks are currently used to achieve network intelligence and network automation. A digital twin network entity includes a physical network entity and a twin network entity. The twin network entity is a replication of the physical network entity, and the two are network systems capable of real-time exchanging and mapping.

In related technologies, there is no research or explanation on how to implement the exchange (interaction) of user plane information between the physical network entity and the twin network entity in communication networks (e.g., 5G/6G etc.), namely, how to transmit user plane information of the physical network entity itself to a user plane of the twin network entity, thereby achieving replication of the user plane of the physical network entity.

Therefore, there is an urgent need for a solution that can achieve the transmission of user plane information of the physical network entity itself to the user plane of the twin network entity.

### SUMMARY

The present disclosure provides an information transmission method and apparatus, and a storage medium, which are intended to provide a method that can achieve the transmission of user plane information of the physical network entity itself to the user plane of the twin network entity.

In a first aspect, the present disclosure provides an information transmission method, being applied to a digital twin network, where the digital twin network includes a physical network entity and a twin network entity of the physical network entity, where the physical network entity includes: a first controller, and network element devices of a first user plane communicatively connected to the first controller, both of which are based on a software-defined network architecture; and the twin network entity includes: a second controller, and network element devices of a second user plane communicatively connected to the second controller, both of which are based on a software-defined network architecture; the information transmission method includes:
obtaining, by the second controller, user plane information from the first controller and sending the user plane information to a corresponding network element device of the second user plane, the user plane information being obtained by the first controller from a network element device in the first user plane.

Optionally, the obtaining, by the second controller, the user plane information from the first controller, includes: obtaining, by a preset device, the user plane information from the first controller and sending the user plane information to the second controller.

Optionally, the preset device includes: a first management device for managing the physical network entity and the twin network entity, the obtaining, by the preset device, the user plane information from the first controller and sending the user plane information to the second controller, includes: obtaining, by the first management device, the user plane information from the first controller and sending the user plane information to the second controller.

Optionally, the preset device includes: a second management device for managing the physical network entity and a third management device for managing the twin network entity, the obtaining, by the first management device, the user plane information from the first controller and sending the user plane information to the second controller, includes: obtaining, by the second management device, the user plane information from the first controller and sending the user plane information to the third management device; and sending, by the third management device, the user plane information to the second controller.

Optionally, the preset device further includes: a first session management device of a first control plane in the physical network entity and a second session management device of a second control plane in the twin network entity, the first session management device being in communicative connection with the first controller, and the second session management device being in communicative connection with the second controller, where the obtaining, by the preset device, the user plane information from the first controller and sending the user plane information to the second controller, includes: obtaining, by the first session management device, the user plane information from the first controller and sending the user plane information to the first management device; sending, by the first management device, the user plane information to the second session management device; and sending, by the second session management device, the user plane information to the second controller.

Optionally, the information transmission method further includes: obtaining, by the first management device, control plane information from a first network storage device of the first control plane and sending the control plane information to a corresponding network element device of the second control plane.

Optionally, the preset device includes: a third session management device of a first control plane in the physical network entity and a fourth session management device of a second control plane in the twin network entity, the third session management device being in communicative connection with the first controller, and the fourth session management device being in communicative connection with the second controller, where the obtaining, by the preset device, the user plane information from the first controller and sending the user plane information to the second controller, includes: obtaining, by the third session management device, the user plane information from the first controller and sending the user plane information to the fourth management device; sending, by the fourth management device, the user plane information to the second controller.

Optionally, the preset device further includes: a first data storage device of the first control plane and a second data storage device of the second control plane, where the obtaining, by the third session management device, the user plane information from the first controller and sending the user plane information to the fourth session management device, includes: obtaining, by the third session management device, the user plane information from the first controller and sending the user plane information to the first data storage device; sending, by the first data storage device, the user plane information to the second data storage device; and sending, by the second data storage device, the user plane information to the fourth session management device.

Optionally, the information transmission method further includes: obtaining, by the first data storage device, control plane information from a first network storage device of a first control plane and sending the control plane information to the second data storage device; and sending, by the second data storage device, the control plane information to a corresponding network element device of the second control plane.

Optionally, the user plane information is obtained from the third session management device through event exposure subscription.

Optionally, the preset device further includes: an independently configured third data storage device, where the obtaining, by the third session management device, the user plane information from the first controller and sending the user plane information to the fourth session management device, includes: obtaining, by the third session management device, the user plane information from the first controller and sending the user plane information to the third data storage device; and sending, by the third data storage device, the user plane information to the fourth session management device.

Optionally, the information transmission method further includes: obtaining, by the third data storage device, control plane information from a first network storage device of a first control plane and sending the control plane information to a corresponding network element device of the second control plane.

Optionally, the preset device includes: a fifth session management device of a second control plane in the twin network entity, the second controller being in communicative connection with the fifth session management device, where the obtaining, by the preset device, the user plane information from the first controller and sending the user plane information to the second controller, includes: obtaining, by the fifth session management device, the user plane information from the first controller and sending the user plane information to the second controller.

Optionally, the twin network entity further includes: a second network storage device of a second control plane, where the information transmission method further includes: obtaining, by the second network storage device, control plane information from a first network storage device of the first control plane and sending the control plane information to a corresponding network element of the second control plane, the first network storage device being a network element in the first control plane configured to collect network element information of other network element devices in the first control plane.

Optionally, the preset device includes: an independently configured fourth data storage device, where the obtaining, by the preset device, the user plane information from the first controller and sending the user plane information to the second controller, includes: obtaining, by the fourth data storage device, the user plane information from the first controller and sending the user plane information to the second controller.

Optionally, the information transmission method further includes: obtaining, by a preset device, control plane information from a first network storage device and sending the control plane information to a corresponding network element device of the second control plane.

In a second aspect, the present disclosure provides an information transmission apparatus, being applied to a digital twin network, where the digital twin network includes a physical network entity and a twin network entity of the physical network entity, where the physical network entity includes: a first controller, and network element devices of a first user plane communicatively connected to the first controller, both of which are based on a software-defined network architecture; and the twin network entity includes: a second controller, and network element devices of a second user plane communicatively connected to the second controller, both of which are based on a software-defined network architecture, the network element devices of the second control plane and the network element devices of the second user plane communicate through the second controller, the information transmission apparatus includes:
a transmitting module, configured to use the second controller to obtain user plane information from the first controller and send the user plane information to a corresponding network element device of the second user plane, the user plane information being obtained by the first controller from a network element device in the first user plane.

In a third aspect, the present disclosure provides a processor readable storage medium, storing thereon a computer program, where the computer program is configured to enable a processor to implement the information transmission method according to any item of the first aspect.

In a fourth aspect, the present disclosure provides a computer program product including an instruction which, when being executed on a computer, cause the computer to perform the information transmission method according to the first aspect as described above.

The information transmission method and apparatus, and the storage medium according to the present disclosure are applied to a digital twin network which includes a physical network entity and a twin network entity of the physical network entity, where the physical network entity includes a first controller, and network element devices of a first user plane communicatively connection to the first controller, both of which are based on a software-defined network architecture; and the twin network entity includes: a second controller, and network element devices of a second user plane communicatively connected to the second controller, both of which are based on a software-defined network architecture; through using the second controller to obtain user plane information from the first controller and send the user plane information to a corresponding network element device of the second user plane, the user plane information being obtained by the first controller from a network element device in the first user plane, transmission of the user plane information of the physical network entity to a network element device of a user plane of the twin network entity is achieved.

It should be understood that the content described in the foregoing summary section is neither intended to limit key or important features of embodiments of the present disclosure, nor is used to limit the scope of the present disclosure. Other features of the present disclosure will become readily comprehensible through the following description.

### BRIEF DESCRIPTION OF DRAWINGS

In order to describe the technical solutions in the present disclosure or the prior art more clearly, the following will briefly introduce the drawings that need to be used in the description of the embodiments or the prior art. Apparently, the drawings in the following description are for some embodiments of the present disclosure. For those of ordinary skill in the art, other drawings may be obtained based on these drawings without creative efforts.
FIG. 1 is a schematic diagram of an SND architecture in an existing technology according to the present disclosure.
FIG. 2 is a schematic diagram of an application scenario according to an embodiment of the present disclosure.
FIG. 3 is a flowchart of a first information transmission method according to an embodiment of the present disclosure.
FIG. 4 is a flowchart of a second information transmission method according to an embodiment of the present disclosure.
FIG. 5 is a flowchart of a third information transmission method according to an embodiment of the present disclosure.
FIG. 6 is a flowchart of a fourth information transmission method according to an embodiment of the present disclosure.
FIG. 7 is a flowchart of a fifth information transmission method according to an embodiment of the present disclosure.
FIG. 8 is a flowchart of a sixth information transmission method according to an embodiment of the present disclosure.
FIG. 9 is a flowchart of a seventh information transmission method according to an embodiment of the present disclosure.
FIG. 10 is a flowchart of an eighth information transmission method according to an embodiment of the present disclosure.
FIG. 11 is a flowchart of a ninth information transmission method according to an embodiment of the present disclosure.

### DESCRIPTION OF EMBODIMENTS

In the present disclosure, "at least one" refers to one or more, "a plurality of" refers to two or more. "And/or" herein describes the association relationship of associated objects, indicating that there can be three relationships, for example, A and/or B can indicate a situation where A exists alone, A and B exist at the same time, and B exists alone, where A and B can be singular or plural. The character "/" generally indicates that the context objects are in an "or" relationship. The expression "at least one (item) of the following" or similar expressions refer to any combination of these items, including a single item (one) or any combination of a plurality of items (ones). For example, at least one (item) of a, b, or c can represent: a, b, c, a-b, a-c, b-c, or a-b-c, where a, b, and c can be singular or plural.

It is understood that, the various steps or operations in the embodiments of the present disclosure are merely examples, and the embodiments of the present disclosure may further perform other operations or variations of various operations. In addition, the various steps can be performed in a different order than presented in the embodiments of the present disclosure, and it is possible that not all of the operations in the embodiments of the present disclosure need to be executed.

The technical solutions according to the embodiments of the present disclosure will be described hereunder clearly and comprehensively in conjunction with the accompanying drawings in the embodiments of the present disclosure. Apparently, the described embodiments are merely some of, rather than all of the embodiments of the present disclosure. Based on the embodiments in the present disclosure, all other embodiments obtained by those of ordinary skill in the art without creative efforts shall fall within the protection scope of the present disclosure.

The technical solutions provided in the embodiments of the present disclosure can be applied to various systems, especially a 6G system. For example, an applicable system can be a global system of mobile communication (global system of mobile communication, GSM), a code division multiple access (code division multiple access, CDMA) system, a wideband code division multiple access (wideband code division multiple access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, 6G new radio (new radio, NR) system, and so on. Each of the various systems includes a terminal and a network device. The system can further include a core network part such as an evolved packet system (Evolved Packet System, EPS), a 6G System (5GS) or the like.

First of all, for better understanding of the present proposal, brief descriptions are respectively made of a Software-Defined Network architecture (Software Defined Network, SDN), a digital twin network, and a problem in existing technologies, which relate to the present proposal, specifically as follows.

### 1. SDN

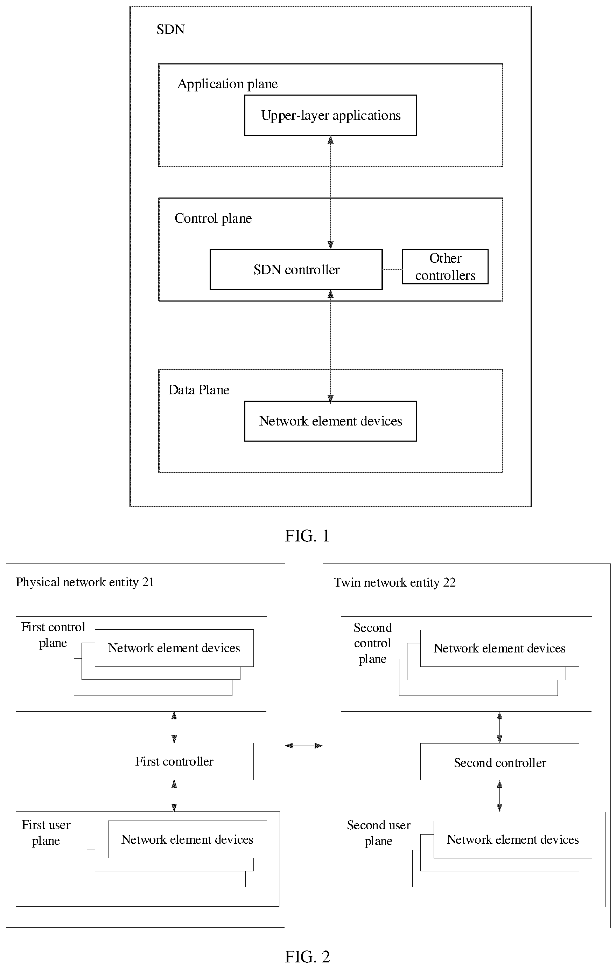

Currently, an SDN is a network architecture, which is designed with the concept of separating a network control plane from a data forwarding plane, and implementing programmable control of underlying hardware through a software platform in a centralized controller so as to realize on-demand allocation of network resources. With reference to FIG. 1 which shows an SDN architecture, the SDN architecture includes an application plane, a control plane, and a data plane. The application plane hosts various SDN-based upper-layer applications, allowing users to program and deploy new applications without concerns for the underlying. The control plane includes an SDN controller and other controllers. The data plane consists of generic network element devices such as switches. The control plane and data plane primarily use OpenFlow and P4Runtime protocols to communicate through the SDN controller. The SDN controller communicates through a southbound interface with the data plane, through a northbound interface with the application plane, through an east-west interface with the other controllers in the control plane.

### 2. Digital Twin Network

A digital twin network is a system having a physical network entity and a twin network entity (virtual twin entity) which can perform real-time exchanging and mapping. The twin network entity is a digital concept and technical approach with the integration and fusion of data and models as its foundation and core, and by constructing precise digital mappings of physical objects in digital space in real time, it simulates, verifies, predicts, and controls the entire lifecycle process of the physical network entity based on data integration, analysis, and prediction, and ultimately, forms an optimized closed loop for intelligent decision-making, where the physical objects it deals with include entities, behaviors, and processes. The data involved in constructing the twin network entity includes real-time sensory data and historical operational data, and the integrated models encompass physical models, mechanistic models, and process models etc. The twin network entity constructs a digital space for the physical network entity, achieving a mapping between the virtual and the real. With the development of digital twin technologies and the increasing complexity of entire network operation and maintenance, and considering the high cost of network failures and high expense of experiments, it is necessary to establish an external abstract mapping of the traditional physical network entity, create a new development framework, and construct a brand-new twin network entity. Through closed-loop control that combines the virtual and real, it changes the established rules of the existing network for planning, construction, maintenance, and optimization, effectively ensures network operation and maintenance, and optimizes the network in real-time, achieving the autonomy of future networks.

### 3. Technical Problem

Currently, user plane information exchange between the physical network entity and the twin network entity has not been realized. Namely, regarding how to transmit the user plane information of the physical network entity itself to network elements of a user plane the twin network entity under the SDN architecture, and further achieve replication of the user plane information of the physical network entity to the twin network entity, there is no research or explanation in related technologies.

To address the foregoing problem, embodiments of the present disclosure provide an information transmission method and apparatus, and a storage medium. The method is applied to a digital twin network which includes a physical network entity and a twin network entity of the physical network entity, where the physical network entity includes a first controller, and network element devices of a first user plane communicatively connected to the first controller, both of which are based on a software-defined network architecture; and the twin network entity includes: a second controller, and network element devices of a second user plane communicatively connected to the second controller, both of which are based on a software-defined network architecture. The information transmission method includes: obtaining, by the second controller, user plane information from the first controller and sending the user plane information to a corresponding network element device of the second user plane, the user plane information being obtained by the first controller from a network element device in the first user plane. The present disclosure employs an SDN architecture in both the physical network entity and the twin network entity, achieving the replication of the user plane information of the physical network entity to the user plane of the twin network entity through a controller.

The method and apparatus are based on a same inventive concept. Since the problem-solving principle for the method is similar to that for the apparatus, cross reference can be made between the implementations of the apparatus and the method, and repetitions will not be elaborated.

With reference to FIG. 2, FIG. 2 is a schematic diagram of an application scenario according to an embodiment of the present disclosure. As shown in FIG. 2, a digital twin network is included. The digital twin network includes a physical network entity 21 and a twin network entity 22. The physical network entity includes: network element devices of a first control plane, a first controller, and network element devices of a first user plane communicatively connected to the first controller, which are based on a software-defined network architecture, and the twin network entity includes: network element devices of a second control plane, a second controller, and network element devices of a second user plane communicatively connected to the second controller, which are based on a software-defined network architecture. The present disclosure is intended to transmit user plane information of the first user plane of the physical network entity 21 to the second user plane of the twin network entity 22 through the first controller and the second controller.

Both of the first controller and the second controller are SDN controllers. The first controller is configured to be communicatively connected to the network element devices of the first user plane to collect the user plane information of the network element devices of the first user plane. The second controller is configured to be communicatively connected to the network element devices of the second user plane, so as to update the user plane information of the network element devices of the first user plane to a corresponding network element device of the second user plane. The network element devices of the first user plane include: programmable devices such as OpenFlow switches and P4 switches.

Additionally, the embodiments of the present disclosure also provide the transmission of control plane information, where the transmission of the control plane information and the transmission of the user plane information are independent processes without a predetermined order. Furthermore, the user plane information in the embodiments of the present disclosure includes at least one item of a forwarding device identifier, link information, a port number, and a port status of the network element devices of the first user plane. The control plane information includes: a network element status and/or network element identifiers of the network element devices of the first control plane.

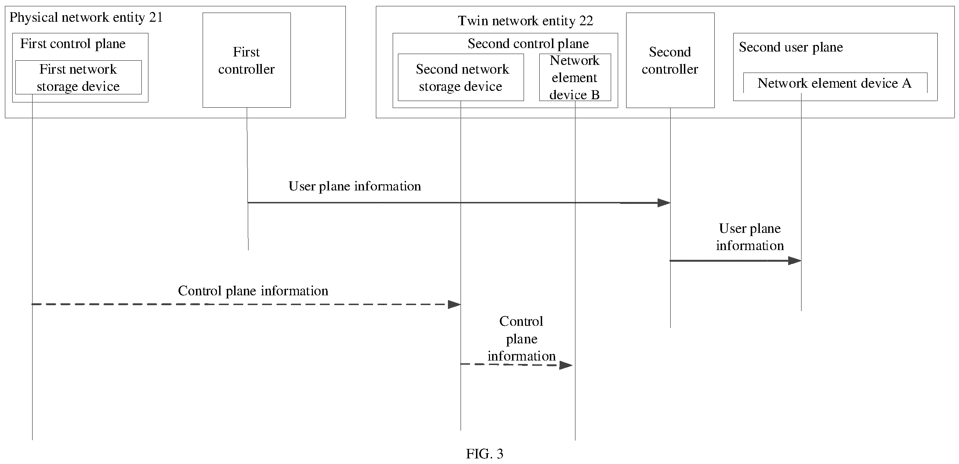

Based on the foregoing FIG. 2, with reference to FIG. 3 which is a schematic flowchart of a first information transmission method according to an embodiment of the present disclosure, including: obtaining, by the second controller, the user plane information from the first controller and sending the user plane information to a corresponding network element device of the second user plane, the user plane information being obtained by the first controller from a network element device in the first user plane.

The first controller collects the user plane information of the various network element devices of the first user plane. The second controller can communicate directly with the first controller to obtain the user plane information from the first controller, and then transmit the obtained user plane information to a corresponding network element device of the second user plane, for example, a network element A.

Specifically, with reference to FIG. 3, obtaining, by the second controller, the user plane information from the first controller, includes: sending, by the second controller, a user plane information query request to the first controller, where the user plane query request carries an information request such as a forwarding device identifier, link information, a port number, a port status or the like; and sending, by the first controller, a query response to the second controller, the query response carrying the user plane information which includes information such as the forwarding device identifier, the link information, the port number, the port status or the like. The sending, by the second controller, the user plane information to a corresponding network element device of the second user plane, includes: according to the received user plane information, issuing, by the second controller, an instruction to the corresponding network element device of the second user plane, such as an instruction for link disconnection, port activation or deactivation, or the like. Upon receiving the instruction issued by the second controller, the corresponding network element device of the second user plane performs a response thereto and performs an adjustment or an update according to the issued instruction, such as disconnecting a link, or activating/deactivating a port.

As an example, after a link disconnection occurs at a network element device C of the first user plane, the first controller collects the user plane information "link disconnection information" of the first user plane, , and sends the user plane information "link disconnection information" to the second controller. The second controller sends the user plane information "link disconnection information" to a network element device corresponding to the network element C in the second user plane.

In addition, it further includes: obtaining, by a second network storage device, control plane information from a first network storage device of the first control plane and sending the control plane information to a corresponding network element of the second control plane, the first network storage device being a network element in the first control plane configured to collect network element information of other network element devices in the first control plane.

With reference to FIG. 3, the first network storage device is a network element device in the first control plane, and the first network storage device is configured to store control plane information of various network element devices in the first control plane. The second network storage device is a network element device in the second control plane, and the second network storage device is a mirror device of the first network storage device.

Specifically, obtaining, by the second network storage device, the control plane information from the first network storage device of the first control plane, includes: sending, by the second network storage device, to the first network storage device a control plane information request, specifically by invoking a network element service discovery request which is used to discover information such as a status, a network element identifier, or the like, of a network element in a network storage function; Step 2: sending, by the first network storage device, to the second network storage device a request response which carries the control plane information including information such as a network element status, a network element identifier, or the like.

Subsequently, sending the control plane information to a corresponding network element device of the second control plane includes: sending, by the second network storage device, an instruction the control plane information to a corresponding network element device of the second control plane, such as a network element device B. For example, when the control plane information is that a session management device has gone offline as a result of a query, the second network storage device sends a deregistration instruction to a session management device of the second control plane. The network element device of the second control plane, upon receiving the instruction (such as an update request) sent by the second network storage device, sends response information (such as an update request response) to the second network storage device, and performs, according to the received instruction, an update on the information such as the status, or the like.

The embodiments of the present disclosure can implement the transmission of the user plane information from the first user plane to the second user plane directly through the first controller and the second controller, in addition, implement the transmission of the control plane information from the first control plane to the second control plane through the first network storage device and the second network storage device.

In the following multiple embodiments, for portions that are the same as those in the embodiment of FIG. 3, reference can be made to the foregoing description, which will not be repeated in the following descriptions.

In an embodiment, the obtaining, by the second controller, the user plane information from the first controller, includes: obtaining, by a preset device, the user plane information from the first controller and sending the user plane information to the second controller.

Specifically, a preset device is provided. The preset device can obtain the user plane information from the first controller and then forward the obtained user plane information to the second controller.

As an example, with reference to FIG. 3, the following steps may be included specifically.
S11: a second network storage device invokes a network element service discovery request to a first network storage device, primarily to discover information such as a status, a network element identifier, or the like, of a network element in a network storage function.
S12: the first network storage device sends, to the second network storage device, a network element service discovery response carrying control plane information.
S13: a second controller sends, to a first controller, a user plane information query request carrying requested information such as a forwarding device identifier, link information, a port number, a port status or the like.
S14: the first controller sends, to the second controller, a query response carrying requested information such as the forwarding device identifier, the link information, the port number, the port status or the like.
S15: the second controller issues, according to the received user plane information, an instruction (for example, for link disconnection, port activation/deactivation, or the like) to a network element device of a second user plane.
S16: the network element device of the second user plane, upon receiving the instruction issued by the second controller, responds thereto.
S17: the network element device of the second user plane performs an adjustment or an update according to the issued instruction.
S18: the second network storage device issues, according to the control plane information found through the service, an instruction to a corresponding network element device of the second control plane. For example, when a session management function has gone offline as a result of a query, the second network storage device sends a deregistration instruction to a session management function in the current entity.
S19: the network element device of the second control plane, upon receiving an update request sent by the second network storage device in the current entity, sends an update request response to the second network storage device.
S110: the network element device in the second control plane performs, according to the received instruction, an update on the information such as the status, or the like.

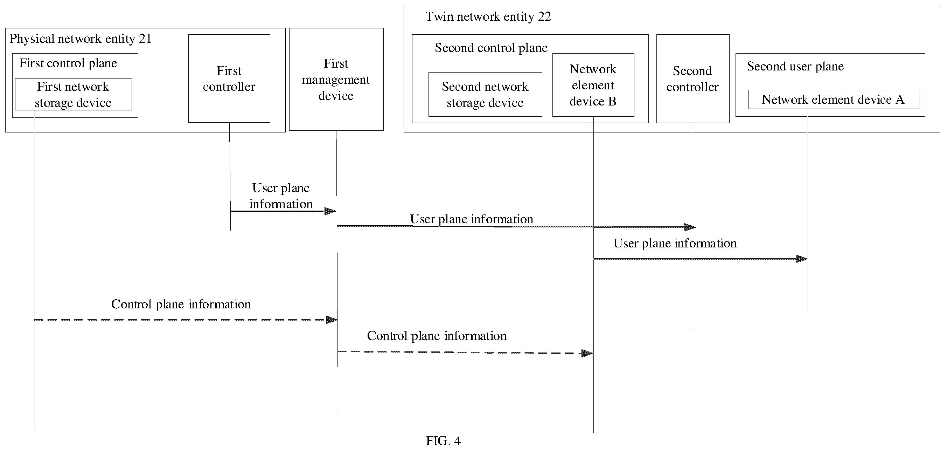

With reference to FIG. 4 which is a schematic flowchart of a second information transmission method according to an embodiment of the present disclosure, the preset device includes: a first management device for managing the physical network entity and the twin network entity, the obtaining, by the preset device, the user plane information from the first controller and sending the user plane information to the second controller, includes: obtaining, by the first management device, the user plane information from the first controller and sending the user plane information to the second controller.

The first management device is independently configured and serves as a management device for managing the physical network entity 21 and the twin network entity 22. Therefore, the first management device can communicate with any network element device of any plane of the physical network entity 21 and the twin network entity 22.

The obtaining, by the preset device, the user plane information from the first controller, includes: sending, by the preset device, a second query request for the user plane information to the first controller; and responding to, by the first controller, the second query request to send the user plane information to the preset device. In the embodiments of the present disclosure, the second query request is a user plane information query request.

Regarding FIG. 4, a user plane information transmission approach is that the first management device actively obtains the user plane information. Specifically, the first management device sends a user plane information query request to the first controller; the first controller sends a user plane information query response to the first management device; the first management device updates the retrieved user plane information to the second controller; the second controller, upon receiving the user plane information, performs an update response thereto; the second controller issues, according to the received user plane information, an instruction to a corresponding network element device of the second user plane, such as an instruction for link disconnection, port activation or deactivation, or the like. Upon receiving the instruction issued by the second controller, the corresponding network element device of the second user plane performs a response thereto and performs an adjustment or an update according to the issued instruction, such as disconnecting a link, or activating/deactivating a port.

Regarding FIG. 4, the obtaining, by a preset device, the user plane information from the first controller, includes: actively reporting, by the first controller, the user plane information to the preset device. Specifically, the first controller sends, to the first management platform, a reporting request including the user plane information. The first management platform responds to the reporting request and updates the retrieved user plane information to the second controller.

Furthermore, for the network structure as shown in FIG. 4, the approach as shown in FIG. 3 can be applied for control plane information transmission, or the approach as shown in FIG. 4 can also be applied for control plane information transmission.

With reference to FIG. 4, the preset device is used to obtain control plane information from the first network storage device and send the control plane information to a corresponding network element device of the second control plane. In FIG. 4, the preset device is the first management device.

Specifically, a control plane information transmission approach is that the first management device is used to send, to the first network storage device, a control plane information query request; and the first network storage device responds to the control plane information query request and sends the control plane information to the first management device. Another control plane information transmission approach is that the first network storage device actively reports, to the first management device, a request carrying the control plane information; and the first management device responds to the request and sends the control plane information to a network device of the second control plane.

As an example, with reference to FIG. 4, the following steps may be included specifically.

S21: a first management device sends a control plane information query request to the first network storage device, where information of network elements of a control plane being queried therefrom is information such as a network element status, a network element identifier, or the like.

S22: the first network storage device sends a control plane information query response to the first management device, the control plane information query response mainly carrying information such as the network element status, the network element identifier, or the like.

S23: the first management device sends, to a first controller, a user plane information query request carrying requested information such as a forwarding device identifier, link information, a port number, a port status or the like.

S24: the first controller sends, to the first management device, a user plane information query response carrying information such as the forwarding device identifier, the link information, the port number, the port status or the like.

S25: the first management device updates, to a second controller, the retrieved user plane information mainly carrying information such as the forwarding device identifier, the link information, the port number, the port status or the like.

S26: the second controller, upon receiving an update message request, performs an update response thereto.

S27: the second controller issues, according to the received user plane information, an instruction (for example, for link disconnection, port activation/deactivation, or the like) to a network element device of a second user plane.

S28: the network element device of the second user plane, upon receiving the instruction issued by the second controller, responds thereto.

S29: the network element device of the second user plane performs an adjustment or an update according to the instruction.

S210: the first management device issues, according to the retrieved control plane information, an instruction to a corresponding network element device of the second control plane. For example, when a session management function has gone offline as a result of a query, the first management device sends a deregistration instruction to a session management function in the current entity.

S211: the network element of the second control plane, upon receiving an update request sent by the first management device, sends an update request response to the first management device.

S212: the network element device in the second control plane performs, according to the received instruction, an update on the information such as the status, or the like.

As another example, steps S21 to S24 are changed, from the first managing device actively querying the user plane information and the control plane information, to the first network storage device and the first controller actively reporting the user plane information and the control plane information to the first management device, but the messages carried have no difference, and other steps are the same as S25 to S212.

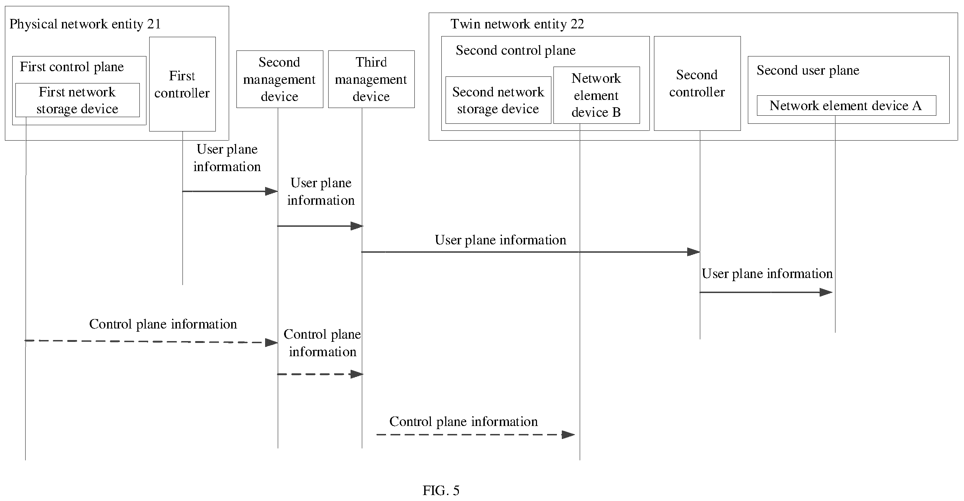

With reference to FIG. 5 which is a schematic flowchart of a third information transmission method according to an embodiment of the present disclosure. Based on FIG. 5, the preset device includes: a second management device for managing the physical network entity and a third management device for managing the twin network entity, obtaining, by the first management device, the user plane information from the first controller and sending the user plane information to the second controller, includes: obtaining, by the second management device, the user plane information from the first controller and sending the user plane information to the third management device; and sending, by the third management device, the user plane information to the second controller.

In FIG. 5, the second management device can actively query the user plane information from the first controller, or the first controller can actively report the user plane information to the second management device which, subsequently, sends the user plane information to the third management device for the third management device to forward to the second controller. For other content, reference can be made to the foregoing embodiments, which will not be repeated here.

In addition, in FIG. 5, it further includes that: the second management device obtains the control plane information from the first network storage device and sends the control plane information to the third management device. Where, the second management device can actively query the control plane information from the first network storage device, or the first network storage device can actively report the control plane information to the second management device. For other content, reference can be made to the foregoing embodiments, which will not be repeated here.

As an example, with reference to FIG. 5, the following steps may be included specifically.

S31: a second management device sends a control plane information query request to the first network storage device, where information of network elements of a control plane being queried therefrom is information such as a network element status, a network element identifier, or the like.

S32: the first network storage device sends a control plane information query response to the second management device, mainly carrying information such as the network element status, the network element identifier, or the like.

S33: the second management device sends, to a first controller therein, a user plane information query request carrying requested information such as a forwarding device identifier, link information, a port number, a port status or the like.

S34: the first controller sends, to the second management device, a user plane information query response carrying information such as the forwarding device identifier, the link information, the port number, the port status or the like.

S35: the second management device updates the collected control plane information and the user plane information to a third management device.

S36: the third management device, upon receiving the information sent by the second management device, sends an update response to the second management device.

S37: the third management device updates, to a second controller, the retrieved user plane information mainly carrying information such as the forwarding device identifier, the link information, the port number, the port status or the like.

S38: the second controller, upon receiving an update message request, performs an update response thereto.

S39: the second controller issues, according to the received user plane information, an instruction (for example, for link disconnection, port activation/deactivation, or the like) to a network element device of a second user plane.

S310: the network element device of the second user plane, upon receiving the instruction issued by the second controller, responds thereto.

S311: the network element device of the second user plane of the digital twin network performs an adjustment or an update according to the instruction.

S312: the third management device issues, according to the retrieved control plane information, an instruction to a corresponding network element device of the second control plane. For example, when a retrieved status of a session management function is offline, the third management device sends a deregistration instruction to a session management function in the current entity.

S313: the network element of the second control plane, upon receiving an update request sent by the third management device, sends an update request response to the third management device.

S314: the network element device in the second control plane performs, according to the received instruction, an update on the information such as the status, or the like.

As another example, the present embodiment differs from the foregoing embodiment by: steps S31 to S34 are changed, from the second managing device actively querying, to the first network storage device and the first controller actively reporting to the second management device, but the messages carried have no difference, and other steps are the same as S35 to S314.

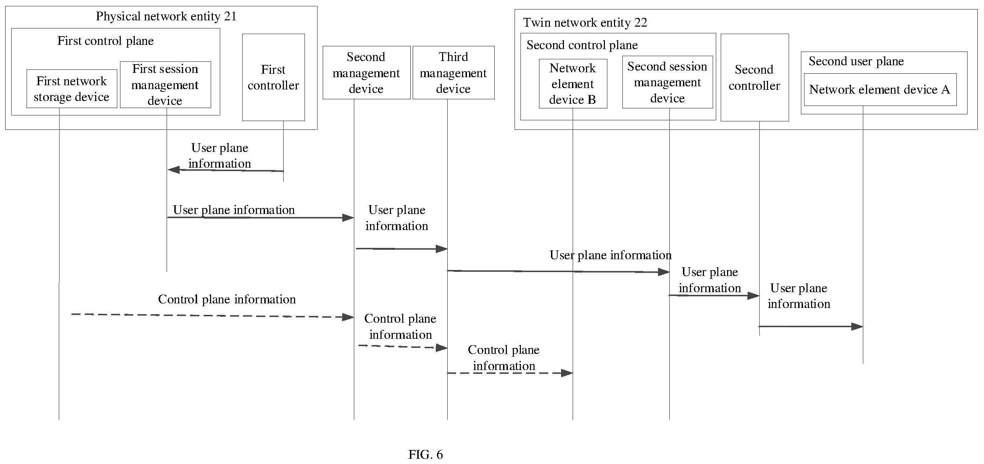

With reference to FIG. 6 which is a schematic flowchart of a fourth information transmission method according to an embodiment of the present disclosure, where the preset device includes: a first session management device of a first control plane in the physical network entity and a second session management device of a second control plane in the twin network entity, the first session management device being in communicative connection with the first controller, and the second session management device being in communicative connection with the second controller, where the obtaining, by the preset device, the user plane information from the first controller and sending the user plane information to the second controller, includes: obtaining, by the first session management device, the user plane information from the first controller and sending the user plane information to the first management device; sending, by the first management device, the user plane information to the second session management device; and sending, by the second session management device, the user plane information to the second controller.

When the preset device includes the second management device and the third management device, the obtaining, by the preset device, the user plane information from the first controller and sending the user plane information to the second controller, includes: obtaining, by the first session management device, the user plane information from the first controller and sending the user plane information to the second management device; sending, by the second management device, the user plane information to the third management device; sending, by the third management device, the user plane information to the second session management device; and sending, by the second session management device, the user plane information to the second controller.

In the embodiment of the present disclosure, it is necessary to enhance the functions of the first session management device and the second session management device. The first session management device can communicate with the first controller and receive the user plane information from the first controller; at the same time, the first session management device can also send the collected user plane information to the first controller. Analogically, the second session management device can communicate with the second controller.

In FIG. 6, the first management device can actively query the user plane information from the first session management device, or the first session management device can actively report the user plane information to the first management device which, subsequently, sends the user plane information to the second session management device for the second session management device to forward to the second controller. For other content, reference can be made to the foregoing embodiments, which will not be repeated here.

In addition, in FIG. 6, it further includes: the first management device obtains the control plane information from the first network storage device and sends the control plane information to a network device of the second control plane. Where, the first management device can actively query the control plane information from the first network storage device, or the first network storage device can actively report the control plane information to the first management device. For other content, reference can be made to the foregoing embodiments, which will not be repeated here.

As an example, with reference to FIG. 6, the following steps may be included specifically.

S41: a first session management device obtains related user plane information from a first controller.

S42: a second management device sends a control plane information query request to the first network storage device, where information of a control plane being queried therefrom is information such as a network element status, a network element identifier, or the like.

S43: the first network storage device sends a control plane information query response to the second management device, mainly carrying the control plane message.

S44: the second management device sends a user plane information query request to the first session management device.

S45: the first session management device sends, to the second management device, a user plane information query response carrying the user plane information such as the forwarding device identifier, the link information, the port number, the port status or the like.

S46: the second management device updates the collected control plane information and the user plane information to a third management device.

S47: the third management device, upon receiving the user plane information and control plane information sent by the second management device, sends an update response to the second management device.

S48: the third management device updates the retrieved user plane information to the second session management device.

S49: the second session management device, upon receiving an update message request, performs an update response thereto.

S410: the second session management device updates the retrieved user plane information to a second controller.

S411: the second controller, upon receiving an update message request, performs an update response thereto.

S412: the second controller issues, according to the received user plane information, an instruction (for example, for link disconnection, port activation/deactivation, or the like) to a network element device of a second user plane.

S413: the network element device of the second user plane, upon receiving the instruction issued by the second controller, responds thereto.

S414: the network element device of the second user plane performs an adjustment or an update according to the issued instruction.

S415: the third management device issues, according to the retrieved control plane information, an instruction to a corresponding network element device of a second control plane. For example, when a retrieved status of a session management function is offline, the third management device sends a deregistration instruction to the second session management device.

S416: the network element of the second control plane, upon receiving an update request sent by the second session management device, sends an update request response to the second session management device.

S417: the network element device in the second control plane performs, according to the received instruction, an update on the information such as the status, or the like.

As another example, with reference to FIG. 6, a present embodiment differs from the foregoing embodiment by: steps S41-S45 are changed, from the second managing device actively querying, to the first network storage device and the first session management device actively reporting to the second management device, but the messages carried have no difference, and other steps are the same as S46-S417.

As an example, with reference to FIG. 6, the following steps may be included specifically.

S51: a first session management device obtains related user plane information from a first controller.

S52: a first management device sends a control plane information query request to a first network storage device, where information of a control plane being queried therefrom is information such as a network element status, a network element identifier, or the like.

S53: the first network storage device sends a control plane information query response to the first management device, mainly carrying control plane information such as the network element status, the network element identifier, or the like.

S54: the first management device sends a user plane information query request to the first session management device.

S55: the first session management device sends, to the first management device, a user plane information query response carrying the user plane information such as the forwarding device identifier, the link information, the port number, the port status or the like.

S56: the first management device updates the retrieved user plane information to the second session management device.

S57: the second session management device, upon receiving an update message request, performs an update response thereto.

S58: the second session management device updates the retrieved user plane information to a second controller.

S59: the second controller, upon receiving an update message request, performs an update response thereto.

S510: the second controller issues, according to the received user plane information, an instruction (for example, for link disconnection, port activation/deactivation, or the like) to a network element device of a second user plane.

S511: the network element device of the second user plane, upon receiving the instruction issued by the second controller, responds thereto.

S512: the network element device of the second user plane performs an adjustment or an update according to the latest user plane information and the operation instruction.

S513: the management platform issues, according to the retrieved control plane information, an instruction to a corresponding network element device of the second control plane. For example, when a session management function has gone offline as a result of a query, the third management device sends a deregistration instruction to a session management function in the current entity.

S514: the network element of the second control plane, upon receiving an update request sent by the first management device, sends an update request response to the first management device.

S515: the network element device in the second control plane performs, according to the received instruction, an update on the information such as the status, or the like.

As another example, with reference to FIG. 6, the present embodiment differs from the foregoing by: steps S51 to S55 are changed, from the first managing device actively querying, to the first network storage device and the first session management device actively reporting to the first management device, but the messages carried have no difference, and other steps are the same as S56 to S515, which will not be repeated.

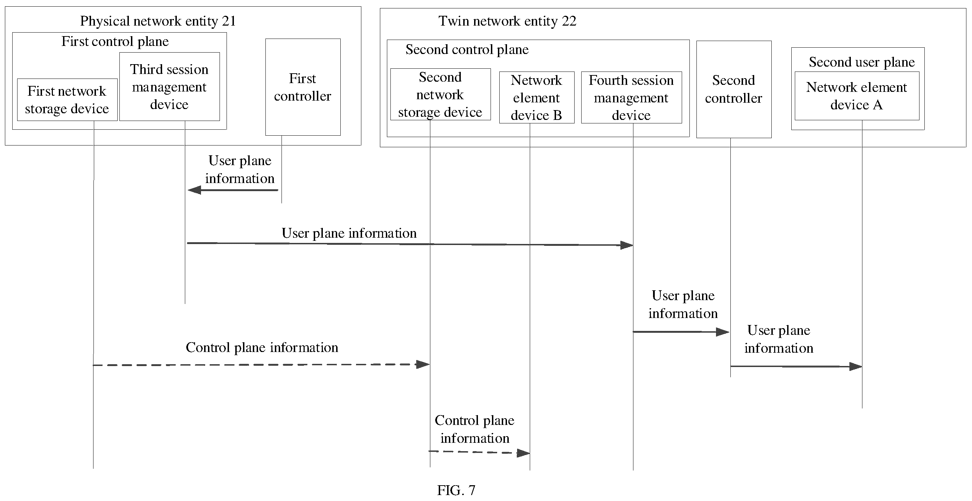

With reference to FIG. 7 which is a schematic flowchart of a fifth information transmission method according to an embodiment of the present disclosure, where the preset device includes: a third session management device of a first control plane in the physical network entity and a fourth session management device of a second control plane in the twin network entity, the third session management device being in communicative connection with the first controller, and the fourth session management device being in communicative connection with the second controller, where the obtaining, by the preset device, the user plane information from the first controller and sending the user plane information to the second controller, includes: obtaining, by the third session management device, the user plane information from the first controller and sending the user plane information to the fourth management device; sending, by the fourth management device, the user plane information to the second controller.

In addition, the information transmission method further includes: obtaining, by the second network storage device, control plane information from a first network storage device of a first control plane and sending the control plane information to a corresponding network element device of the second control plane.

Moreover, the user plane information is obtained from the third session management device through event exposure subscription. Specifically, the fourth session management device invokes an event exposure service request to the third session management device, primarily to subscribe to the user plane information in the third session management device. The third session management device, having collected the user plane information and information updates from the first controller, sends, to the fourth session management device, an event exposure subscription response carrying the user plane information.

As an example, with reference to FIG. 7, the following steps may be included specifically.

S61: a third session management device obtains related user plane information from a first controller.

S62: a second network storage device invokes a network element service discovery request to a first network storage device, primarily to discover control plane information such as a network element status, a network element identifier, or the like, in the first network storage device.

S63: the first network storage device sends, to the second network storage device, a network element service discovery response carrying the control plane information.

S64: a fourth session management device invokes an event exposure service request to the third session management device, primarily to subscribe to the user plane information in the third session management device, primarily including information such as a forwarding device identifier, link information, a port number, a port status, or the like.

S65: the third session management device, having collected the user plane information and information updates, sends, to the fourth session management device, an event exposure subscription response carrying a message including the user plane information.

S66: the fourth session management device updates the retrieved user plane information to a second controller.

S67: the second controller, upon receiving an update message request, performs an update response thereto.

S68: the second controller issues, according to the received user plane information, an instruction (for example, for link disconnection, port activation/deactivation, or the like) to a network element device of a second user plane.

S69: the network element device of the second user plane, upon receiving the instruction issued by the second controller, responds thereto.

S610: the network element device of the second user plane performs an adjustment or an update according to the issued instruction.

S611: the second network storage device issues, according to the control plane information retrieved through the service, an instruction to a corresponding network element device of the second control plane. For example, when a session management function has gone offline as a result of a query, the second network storage device sends a deregistration instruction to a session management function in the current entity.

S612: the network element device of the second control plane, upon receiving an update request sent by the second network storage device in the current entity, sends an information update request response to the second network storage device.

S613: the network element device in the second control plane performs, according to the received instruction, an update on the information such as the status, or the like.

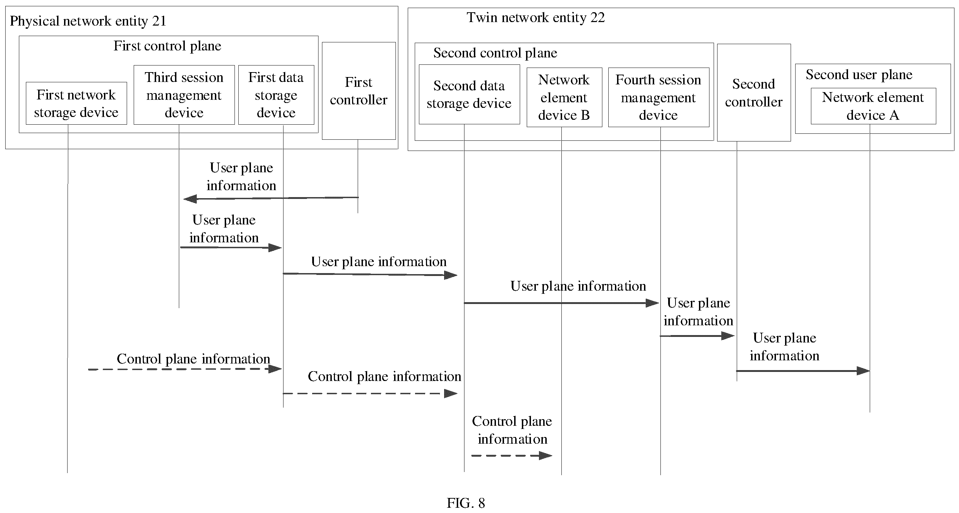

With reference to FIG. 8 which is a schematic flowchart of a sixth information transmission method according to an embodiment of the present disclosure, where the preset device further includes: a first data storage device of the first control plane and a second data storage device of the second control plane, where the obtaining, by the third session management device, the user plane information from the first controller and sending the user plane information to the fourth session management device, includes: obtaining, by the third session management device, the user plane information from the first controller and sending the user plane information to the first data storage device; sending, by the first data storage device, the user plane information to the second data storage device; and sending, by the second data storage device, the user plane information to the fourth session management device.

In the embodiments of the present disclosure, the data storage devices can collect and store all data from mobile users and intelligent network elements, and these data can be subscribed to by an intelligent plane in a 6G network for specific purposes. In the embodiments of the present disclosure, the first data storage device is configured at the first control plane, and the second data storage device is configured at the second control plane. The added first data storage device can be used to store data information from terminals, wireless networks, core networks, etc.

In the embodiment of the present disclosure, it is also necessary to enhance the functions of the third session management device and the fourth session management device. The third session management device can communicate with the first controller and receive the user plane information from the first controller; at the same time, the third session management device can also send the collected user plane information to the first controller. Analogically, the third session management device can communicate with the second controller.

In addition, the information transmission method further includes: obtaining, by the first data storage device, control plane information from a first network storage device of a first control plane and sending the control plane information to the second data storage device; and sending, by the second data storage device, the control plane information to a corresponding network element device of the second control plane.

Specifically, the first data storage device invokes a network element service discovery request to the first network storage device, and the first network storage device sends, to the first data storage device, a network element service discovery response carrying the control plane information.

Moreover, in FIG. 8, the user plane information is also obtained from the third session management device through event exposure subscription. For the specific method for event exposure subscription, reference can be made to the foregoing description, which will not be repeated.

As an example, with reference to FIG. 8, the following steps may be included specifically.

S71: a third session management device obtains related user plane information from a first controller.

S72: a first data storage device invokes a network element service discovery request to a first network storage device, primarily to discover control plane information in the first network storage device, such as a network element status, a network element identifier, or the like.

S73: the first network storage device sends, to the first data storage device, a network element service discovery response carrying the control plane information.

S74: the first data storage device invokes an event exposure request to the third session management device, primarily to subscribe to the user plane information in the third session management device, primarily including information such as a forwarding device identifier, link information, a port number, a port status, or the like.

S75; the third session management device, having collected the user plane information and information updates, sends, to the third session management device, an event exposure subscription response carrying a message including the user plane information.

S76: the first data storage sends the collected control plane information and the user plane information to a second data storage device.

S77: the second data storage device, upon receiving the information updates, sends an update response to the first data storage device.

S78: the second data storage device updates the retrieved user plane information to the fourth session management device in the current entity.

S79: the fourth session management device, upon receiving the user plane information, performs an update in response thereto.

S710: the fourth session management device updates the retrieved user plane information to a second controller.

S711: the second controller, upon receiving an update message request, performs an update response thereto.

S712: the second controller issues, according to the received user plane information, an instruction (for example, for link disconnection, port activation/deactivation, or the like) to a network element device of a second user plane.

S713: the network element device of the second user plane, upon receiving the instruction issued by the second controller, responds thereto.

S714: the network element device of the second user plane performs an adjustment or an update according to the latest user plane information and the operation instruction.

S715: the second data storage device issues, according to the retrieved control plane information, an instruction to a corresponding network element device of the second control plane. For example, when a session management function has gone offline as a result of a query, the second data storage device sends a deregistration instruction to a fourth session management device in the current entity.

S716: the network element device of the second control plane, upon receiving an update request sent by the second data storage device in the current entity, sends an update request response to the second data storage device.

S717: the network element device in the second control plane performs, according to the received instruction, an update on the information such as the status, or the like.

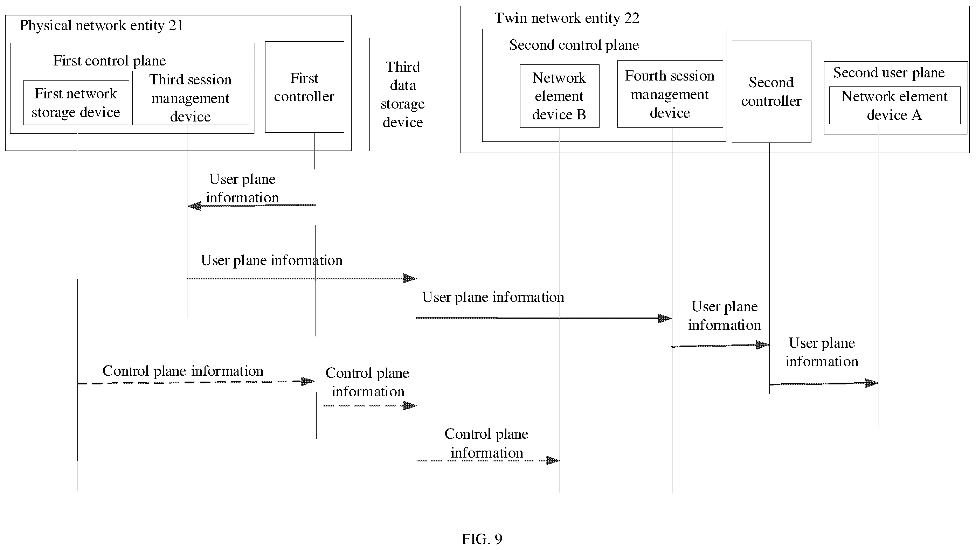

With reference to FIG. 9 which is a schematic flowchart of a seventh information transmission method according to an embodiment of the present disclosure, where the preset device further includes: an independently configured third data storage device, where the obtaining, by the third session management device, the user plane information from the first controller and sending the user plane information to the fourth session management device, includes: obtaining, by the third session management device, the user plane information from the first controller and sending the user plane information to the third data storage device; and sending, by the third data storage device, the user plane information to the fourth session management device.

In the embodiments of the present disclosure, the "China Mobile's 6G Network Architecture Technology White Paper" introduces the 6G architecture, and mentions the three layers, four bodies, and five planes, and one of the five planes is the data plane. The data plane is a newly added plane in the 6G network architecture, aiming to achieve efficient and secure iteration of massive user data, reliable migration of network states, and trusted mechanisms for integrating data services. This plane will establish efficient and unified data management functions, supporting refined data collection, efficient data transmission, flexible data storage, and distributed data collaboration; the plane further takes into consideration both of data reliability, and data privacy and security, enabling closed-loop management of the entire data lifecycle; at the same time, taking data as a service product, the plane constructs business logic based on data providers and consumers, and provides diversified data value-added services. The plane mainly has capabilities such as data fusion, data continuity, data services, or the like. Therefore, the data plane collects and stores all data from mobile users and intelligent network elements, and such data can be subscribed to by an artificial intelligence plane for specific purposes. The data storage function, which is provided by the data storage devices as mentioned in the embodiments of the present disclosure, is a provisional term for the data plane; it can be an independent module, or a network element device in the control plane. Regardless of its form of existence, it has the data collection function as mentioned above. The third data storage device in FIG. 9 is an independently configured network element device.

In FIG. 9, the third data storage device can actively query the user plane information from the third session management device, or the third session management device can actively report the user plane information to the third data storage device which, subsequently, the third data storage device sends the user plane information to the fourth session management device for the fourth session management device to forward to the second controller. For other content, reference can be made to the foregoing embodiments, which will not be repeated here.

In addition, the information transmission method further includes: obtaining, by the third data storage device, control plane information from a first network storage device of a first control plane and sending the control plane information to a corresponding network element device of the second control plane.

specifically, the first controller obtains the control plane information from the first network storage device and sends the control plane information to the third data storage device. Where, the third data storage device can actively query the control plane information from the first network storage device, or the first network storage device can actively report the control plane information to the third data storage device. For other content, reference can be made to the foregoing embodiments, which will not be repeated here.

As an example, with reference to FIG. 9, the following steps may be included specifically.

S81: a third session management device obtains related user plane information from a first controller.

S82: a third data storage device sends a control plane information query request to the first network storage device, where information of a control plane being queried therefrom is information such as a network element status, a network element identifier, or the like.

S83: the first network storage device sends, to the third data storage device, a control plane information query response mainly carrying control plane information such as the network element status, the network element identifier, or the like.

S84: the third data storage device sends a user plane information query request to the third session management device.

S85: the third session management device sends a user plane information query request to the third data storage device.

S86: the third data storage device updates the retrieved user plane information to the fourth session management device.

S87: the fourth session management device, upon receiving an update message request, performs an update response thereto.

S88: the fourth session management device updates the retrieved user plane information to a second controller.

S89: the second controller, upon receiving an update message request, performs an update response thereto.

S810: the second controller issues, according to the received user plane information, an instruction (for example, an instruction for link disconnection, port activation/deactivation, or the like) to a network element device of a second user plane.

S811: the network element device of the second user plane, upon receiving the instruction issued by the second controller, responds thereto.

S812: the network element device of the second user plane performs an adjustment or an update according to the latest user plane information and the operation instruction.

S813: the third management device issues, according to the retrieved control plane information, an instruction to a corresponding network element device of the second control plane. For example, when a session management function has gone offline as a result of a query, the third management device sends a deregistration instruction to a session management function in the current entity.

S814: the network element device of the second control plane, upon receiving an update request sent by the third data storage device, sends an update request response to the third data storage device.

S815: the network element device in the second control plane performs, according to the received instruction, an update on the information such as the status, or the like.

As another example, with reference to FIG. 9, a present embodiment differs from the foregoing embodiment by: steps S81 to S85 are changed, from the third data storage device actively querying, to the first network storage device and the third session management device actively reporting to the third data storage device, but the messages carried have no difference, and other steps are the same as S86 to S15, which will not be repeated.

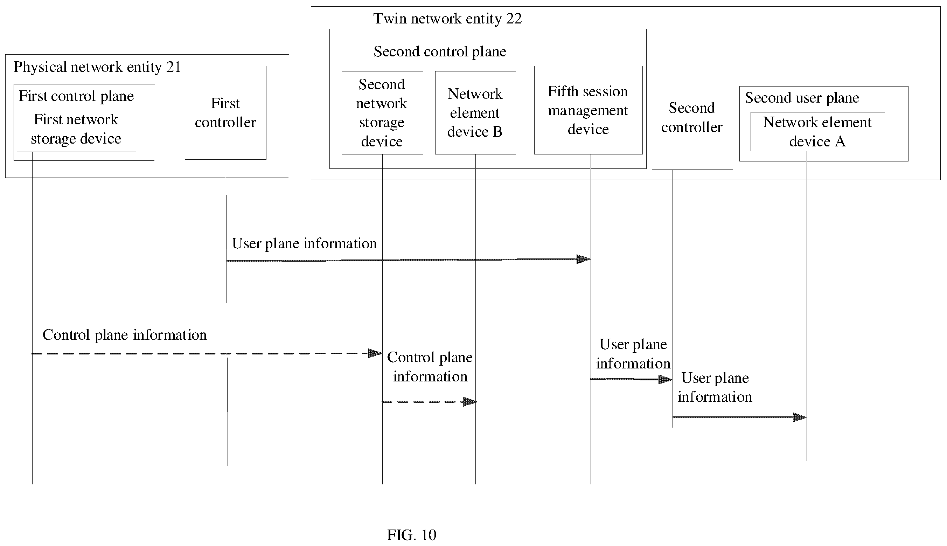

With reference to FIG. 10 which is a schematic flowchart of an eighth information transmission method according to an embodiment of the present disclosure, the preset device includes: a fifth session management device of a second control plane in the twin network entity, the second controller being in communicative connection with the fifth session management device, where the obtaining, by the preset device, the user plane information from the first controller and sending the user plane information to the second controller, includes: obtaining, by the fifth session management device, the user plane information from the first controller and sending the user plane information to the second controller.

In the embodiment of the present disclosure, the fifth session management function can directly obtain the user plane information from the first controller. Specifically, the fifth session management function sends a query request for the user plane information to the first controller, and the first controller sends, to the fifth session management function, a response carrying the user plane information.

In addition, the twin network entity further includes: a second network storage device of a second control plane, where the information transmission method further includes: obtaining, by the second network storage device, control plane information from a first network storage device of the first control plane and sending the control plane information to a corresponding network element of the second control plane, the first network storage device being a network element in the first control plane configured to collect network element information of other network element devices in the first control plane.

As another example, with reference to FIG. 10 and S61 to S613 in the foregoing embodiment of FIG. 7, a present embodiment differs from the embodiment of FIG. 7 by: the third session management function is replaced with the first controller, and steps S64-S65 are replaced with a user plane information query request and response, such that the fifth session management device directly queries the user plane information from the user plane function, but the user plane information retrieved have no difference, and no changes have been made to other steps.

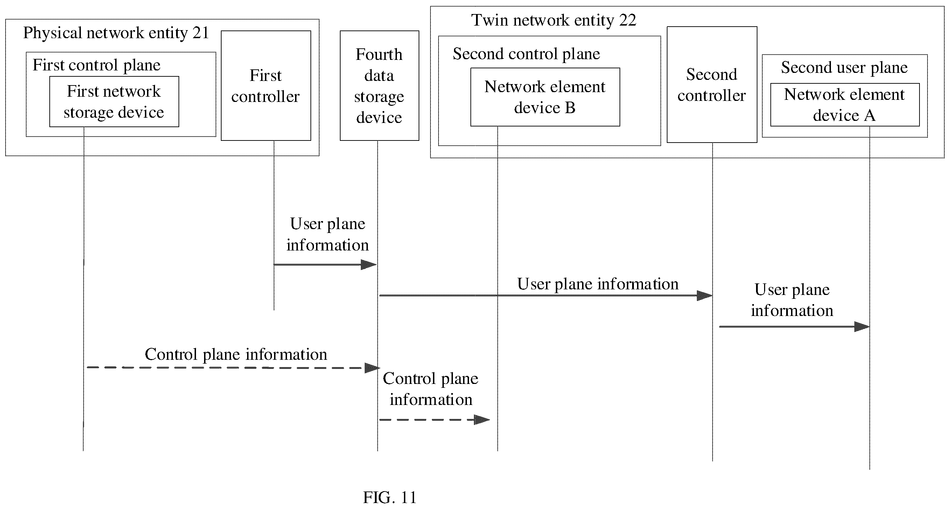

With reference to FIG. 11 which is a schematic flowchart of an information transmission method according to a ninth embodiment of the present disclosure, the preset device includes: an independently configured fourth data storage device, where the obtaining, by the preset device, the user plane information from the first controller and sending the user plane information to the second controller, includes: obtaining, by the fourth data storage device, the user plane information from the first controller and sending the user plane information to the second controller.

In FIG. 11, the fourth data storage device can actively query the user plane information from the first controller, or the first controller can actively report the user plane information to the fourth data storage device which, subsequently, sends the user plane information to the second controller. For other content, reference can be made to the foregoing embodiments, which will not be repeated here.

The information transmission method further includes: obtaining, by a preset device, control plane information from a first network storage device and sending the control plane information to a corresponding network element device of the second control plane.

Specifically, in FIG. 11, the fourth data storage device obtains the control plane information from the first network storage device and sends the control plane information to a network device of the second control plane. Where, the fourth data storage device can actively query the control plane information from the first network storage device, or the first network storage device can actively report the control plane information to the fourth data storage device. For other content, reference can be made to the foregoing embodiments, which will not be repeated here.

As an example, with reference to FIG. 11, the following steps may be included specifically.

S91: a fourth data storage device sends a control plane information query request to a first network storage device.

S92: the first network storage device sends, to the fourth data storage device, a control plane information query response mainly carrying the user plane information.

S93: the fourth data storage device sends a user plane information query request to the first controller.

S94: the first controller sends, to the fourth data storage device, a user plane information query response carrying user plane information.

S95: the fourth data storage device updates the retrieved user plane information to a second controller.

S96: the second controller, upon receiving an update message request, performs an update response thereto.

S97: the second controller issues, according to the received user plane information, an instruction (for example, for link disconnection, port activation/deactivation, or the like) to a network element device of a second user plane.

S98: the network element device of the second user plane, upon receiving the instruction issued by the second controller, responds thereto.

S99: the network element device of the second user plane performs an adjustment or an update according to the instruction.

S910: the data storage function issues, according to the retrieved control plane network element information, an instruction to a corresponding network element device of the second control plane. For example, when a session management device of the first control plane has gone offline as a result of a query, the fourth data storage device sends a deregistration instruction to a session management device in the twin network entity.

S911: the network element device of the second control plane, upon receiving an update request sent by the fourth data storage device, sends an update request response to the fourth data storage device.

S912: the network element device in the second control plane performs, according to the received instruction, an update on the information such as the status, or the like.

In the embodiments of the present disclosure, through an SDN architecture, various approaches are implemented to transmit the user plane information of the physical network entity to a network element device of the user plane of the twin network entity.

In addition, embodiments of the present disclosure provides an information transmission apparatus, being applied to a digital twin network, where the digital twin network includes a physical network entity and a twin network entity of the physical network entity, where the physical network entity includes: a first controller, and network element devices of a first user plane communicatively connected to the first controller, both of which are based on a software-defined network architecture; and the twin network entity includes: a second controller, and network element devices of a second user plane communicatively connected to the second controller, both of which are based on a software-defined network architecture; the information transmission apparatus includes: a transmitting module, configured to use the second controller to obtain user plane information from the first controller and send the user plane information to a corresponding network element device of the second user plane, the user plane information being obtained by the first controller from a network element device in the first user plane.

Herein, it should be noted that the aforementioned apparatus according to the present disclosure can implement all the method steps implemented in the foregoing method embodiments, and achieve equivalent technical effects. As such, the same parts and beneficial effects as those in the method embodiments will not be specifically elaborated in the present embodiment.

It should be noted that, in the embodiments of the present disclosure, the partition of the units, being illustrative, is only a logical function partition, and there may be other manners for partition in an actual implementation. In addition, respective functional units in the embodiments of the present disclosure may be integrated into a processing unit, or may exist alone physically, or two or more units may be integrated into one unit. The aforementioned unit can be implemented in a form of hardware, or it can also be implemented in a form of a software function unit.

The integrated unit may be stored in a processor readable storage medium if being implemented in the form of a software functional unit and sold or used as a standalone product. Based on such understanding, the technical solutions of the present disclosure, substantively, or a part of which that makes a contribution to the prior art, or the whole or a part of which, may be embodied in the form of a software product which is stored in a storage medium, where a plurality of instructions are included to cause a computer device (which can be a personal computer, a server, a network device, etc.) or a processor (processor) to execute all or part of the steps of the methods according to the various embodiments of the present disclosure. The aforementioned storage medium includes: a USB flash disk, a mobile hard disk, a read-only memory (read-only memory, ROM), a random access memory (random access memory, RAM), a magnetic disk or an optical disk, or other media that can store program codes.

An embodiment of the present disclosure provides a processor readable storage medium, storing thereon a computer program, where the computer program is configured to enable a processor to implement any of the methods related to a terminal according to the foregoing embodiments of the present application. A processor is enabled to implement all of the method steps implemented by the terminal in the foregoing method embodiments, and achieve a same technical effect. Same contents and beneficial effects of this embodiment as those of the method embodiments will not be specifically elaborated here.

The processor readable storage medium can be any available medium or data storage device that the processor can access, including but not limited to a magnetic memory (such as a floppy disk, a hard drive, a magnetic tape, a magneto-optical disk (MO), etc.), an optical memory (such as a CD, a DVD, a BD, a HVD, etc.), as well as a semiconductor memory (such as a ROM, an EPROM, an EEPROM, a non-volatile memory (NAND FLASH), a solid-state drive (SSD), etc.).

Those skilled in the art should understand that the embodiments of the present disclosure can be provided as a method, a system, or a computer program product. Therefore, the present disclosure can adopt the form of a complete hardware embodiment, a complete software embodiment, or an embodiment combining software and hardware aspects. Moreover, the disclosure can adopt the form of a computer program product implemented on one or more computer-usable storage media (including but not limited to a magnetic disk storage and an optical storage) containing computer-usable program codes therein.

The present disclosure is described with reference to flowcharts and/or block diagrams of the method, apparatus and computer program product according to the embodiments of the present disclosure. It should be understood that each flow and/or block in the flowchart and/or block diagram, and combinations of the flows and/or blocks in the flowchart and/or block diagram can be implemented by the computer executable instructions. These computer executable instructions can be provided to a processor of a general-purpose computer, a special-purpose computer, an embedded processor or other programmable data processing device to produce a machine, such that the instructions executed by the processor of the computer or other programmable data processing device produce means for implementing the functions specified in one or more flows in the flowcharts and/or one or more blocks in the block diagrams.

These processor executable instructions may also be stored in a processor-readable memory that can direct a computer or other programmable data processing device to function in a particular manner, such that the instructions stored in the processor-readable memory produce an article of manufacture including instruction means that implement the functions specified in one or more flows in the flowcharts and/or one or more blocks in the block diagram.

These computer program instructions may also be loaded onto a computer or other programmable data processing devices, such that a series of operational steps are performed on the computer or other programmable devices to produce a computer-implemented process, such that the instructions executed on the computer or other programmable devices provide steps for implementing the functions specified in one or more flows in the flowcharts and/or one or more blocks in the block diagram.

Apparently, various modifications and variations can be made to the present disclosure by those skilled in the art without departing from the spirit and scope of the present disclosure. Thus, if these modifications and variations of the present disclosure are within the scope of the claims of the present disclosure and their technical equivalents, the present disclosure is also intended to include these modifications and variations.

## Claims

1. An information transmission method, **characterized in that** the method is applied to a digital twin network, wherein the digital twin network comprises a physical network entity and a twin network entity of the physical network entity, wherein the physical network entity comprises: a first controller, and network element devices of a first user plane communicatively connected to the first controller, both of which are based on a software-defined network architecture; and the twin network entity comprises: a second controller, and network element devices of a second user plane communicatively connected to the second controller, both of which are based on a software-defined network architecture;
the information transmission method comprises:
obtaining, by the second controller user plane information from the first controller and sending the user plane information to a corresponding network element device of the second user plane, the user plane information being obtained by the first controller from a network element device in the first user plane.

2. The information transmission method according to claim 1, wherein, the obtaining, by the second controller, the user plane information from the first controller, comprises:
obtaining, by a preset device, the user plane information from the first controller and sending the user plane information to the second controller.

3. The information transmission method according to claim 2, wherein the preset device comprises: a first management device for managing the physical network entity and the twin network entity.

4. The information transmission method according to claim 2, wherein the preset device comprises: a second management device for managing the physical network entity and a third management device for managing the twin network entity; wherein the obtaining, by the preset device, the user plane information from the first controller and sending the user plane information to the second controller, comprises:
obtaining, by the second management device, the user plane information from the first controller and sending the user plane information to the third management device; and
sending, by the third management device, the user plane information to the second controller.

5. The information transmission method according to claim 3, wherein the preset device further comprises: a first session management device of a first control plane in the physical network entity and a second session management device of a second control plane in the twin network entity, the first session management device being in communicative connection with the first controller, and the second session management device being in communicative connection with the second controller, wherein the obtaining, by the preset device, the user plane information from the first controller and sending the user plane information to the second controller, comprises:
obtaining, by the first session management device, the user plane information from the first controller and sending the user plane information to the first management device;
sending, by the first management device, the user plane information to the second session management device; and
sending, by the second session management device, the user plane information to the second controller.

6. The information processing method according to claim 5, wherein the information transmission method further comprises:
obtaining, by the first management device, control plane information from a first network storage device of the first control plane and sending the control plane information to a corresponding network element device of the second control plane.

7. The information transmission method according to claim 2, wherein the preset device comprises: a third session management device of a first control plane in the physical network entity and a fourth session management device of a second control plane in the twin network entity, the third session management device being in communicative connection with the first controller, and the fourth second session management device being in communicative connection with the second controller, wherein the obtaining, by the preset device, the user plane information from the first controller and sending the user plane information to the second controller, comprises:
obtaining, by the third session management device, the user plane information from the first controller and sending the user plane information to the fourth session management device; and
sending, by the fourth session management device, the user plane information to the second controller.

8. The information transmission method according to claim 7, wherein the preset device further comprises: a first data storage device of the first control plane and a second data storage device of the second control plane, wherein the obtaining, by the third session management device, the user plane information from the first controller and sending the user plane information to the fourth session management device, comprises:
obtaining, by the third session management device, the user plane information from the first controller and sending the user plane information to the first data storage device;
sending, by the first data storage device, the user plane information to the second data storage device; and
sending, by the second data storage device, the user plane information to the fourth session management device.

9. The information transmission method according to claim 8, wherein, the information transmission method further comprises:
obtaining, by the first data storage device, control plane information from a first network storage device of the first control plane and sending the control plane information to the second data storage device; and
sending, by the second data storage device, the control plane information to a corresponding network element device of the second control plane.

10. The information transmission method according to claim 7 or 8, wherein the user plane information is obtained from the third session management device through event exposure subscription.

11. The information transmission method according to claim 7, wherein the preset device further comprises: an independently configured third data storage device, wherein the obtaining, by the third session management device, the user plane information from the first controller and sending the user plane information to the fourth session management device, comprises:
obtaining, by the third session management device, the user plane information from the first controller and sending the user plane information to the third data storage device; and
sending, by the third data storage device, the user plane information to the fourth session management device.

12. The information transmission method according to claim 11, wherein, the information transmission method further comprises:
obtaining, by the third data storage device, control plane information from a first network storage device of the first control plane and sending the control plane information to a corresponding network element of the second control plane.

13. The information transmission method according to claim 2, wherein the preset device comprises: a fifth session management device of a second control plane in the twin network entity, the second controller being in communicative connection with the fifth session management device, wherein the obtaining, by the preset device, the user plane information from the first controller and sending the user plane information to the second controller, comprises:
obtaining, by the fifth session management device, the user plane information from the first controller and sending the user plane information to the second controller.

14. The information transmission method according to any one of claims 1, 7, or 13, wherein the twin network entity further comprises: a second network storage device of a second control plane, wherein the information transmission method further comprises:
obtaining, by the second network storage device, control plane information from a first network storage device of the first control plane and sending the control plane information to a corresponding network element of the second control plane, the first network storage device being a network element in the first control plane configured to collect network element information of other network element devices in the first control plane.

15. The information transmission method according to claim 2, wherein the preset device comprises: an independently configured fourth data storage device, wherein the obtaining, by the preset device, the user plane information from the first controller and sending the user plane information to the second controller, comprises:
obtaining, by the fourth data storage device, the user plane information from the first controller and sending the user plane information to the second controller.

16. The information processing method according to any one of claims 3, 4 or 15, wherein, the information transmission method further comprises:
obtaining, by the preset device, control plane information from the first network storage device and sending the control plane information to a corresponding network element device of the second control plane.

17. An information transmission apparatus, **characterized in that** the apparatus is applied to a digital twin network, wherein the digital twin network comprises a physical network entity and a twin network entity of the physical network entity, wherein the physical network entity comprises: a first controller, and network element devices of a first user plane communicatively connected to the first controller, both of which are based on a software-defined network architecture; and the twin network entity comprises: a second controller, and network element devices of a second user plane communicatively connected to the second controller, both of which are based on a software-defined network architecture, the network element devices of the second control plane and the network element devices of the second user plane communicate through the second controller, the information transmission apparatus comprises:
a transmitting module, configured to use the second controller to obtain user plane information from the first controller and send the user plane information to a corresponding network element device of the second user plane, the user plane information being obtained by the first controller from a network element device in the first user plane.

18. A processor readable storage medium, **characterized in that** the storage medium stores thereon a computer program, wherein the computer program is configured to enable the processor to implement the information transmission method according to any one of claims 1 to 16.
